# EUROPEAN PATENT APPLICATION

(11) **EP 1 786 231 A1**
(43) Date of publication of application: **16.05.2007**
(21) Application number: 06023476.2
(22) Date of filing: 10.11.2006
(51) Int. Cl.: H04Q 7/38

(54) **Apparatus and method for performing handover for multi-hop system in a broadband wireless access communication network**

(30) Priority: 10.11.2005 KR 20050107644
(71) Applicant: Samsung Electronics Co., Ltd., Suwon-si, Gyeonggi-Do (KR)
(72) Inventor: Suh, Kyung-Joo, Gangnam-gu, Seoul (KR); Han, Ki-Young, Giheung-gu,Yongin-si, Gyeonggi-do (KR); Cho, Joong-Keun, Suwon-si, Gyeonggi-do (KR); Cho, Jae-Hee, Yeongdeungpo-gu, Seoul (KR); Yoon, Soon-Young, Songpa-gu, Seoul (KR); Hwang, In-Seok, Songpa-gu, Seoul (KR)
(74) Representative: Grünecker, Kinkeldey, Stockmair & Schwanhäusser Anwaltssozietät

(57) **Abstract**

A handover apparatus and method for a multi-hop system in a BWA communication network are provided. In a handover system supporting multi-hop system in a BWA communication network, a BS periodically broadcasts a message with neighboring BS/RS information. When a new BS or RS needs to be added, an RS periodically broadcasts the broadcast message received from the BS with information about the new BS or RS. An MS receives the broadcast message from the RS and requests information about BSs or RSs to which the MS can perform a handover by notifying candidate BSs or RSs for the handover. The candidate BSs or RSs may include a BS or RS not included in the broadcast message, if the MS detects the BS or RS by scanning. The MS selects a target BS or RS based on the BS or RS information received from the BS, and performs the handover to the target BS or RS.

## Description

### PRIORITY

This application claims priority under 35 U.S.C. § 119 to an application entitled "Apparatus and Method for Performing Handover For Multi-Hop in a Broadband Wireless Access Communication Network" filed in the Korean Intellectual Property Office on November 10, 2005 and assigned Serial No. 2005-107644, the contents of which are incorporated herein by reference.

### BACKGROUND OF THE INVENTION

### 1. Field of the Invention

The present invention relates generally to handover, and in particular, to an apparatus and method for performing handover for a multi-hop system in a Broadband Wireless Access (BWA) communication network.

### 2. Description of the Related Art

Along with the increasing demands for services requiring high data rates, there is a pressing need for communication systems offering higher data rates than 3^{rd} Generation (3G) mobile communication systems based on Code Division Multiple Access (CDMA). A multi-hop relay scheme is a requisite for designing a higher-rate system and increasing service coverage.

The multi-hop relay scheme increases data rate and expands service coverage by use of a Multi-Hop Base Transceiver Station (MH-BTS) between a BTS or Base Station (BS) and a Mobile Station (MS). The term MH-BTS is herein interchangeable with Relay Station (RS).

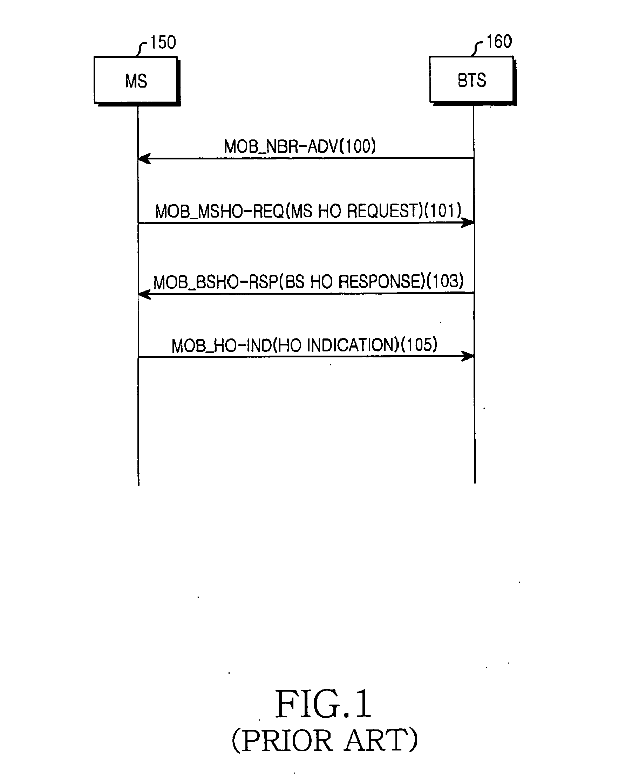

FIG. 1 is a diagram of a signal flow for a handover procedure in a conventional BWA communication network. Messages exchanged during the handover procedure are compliant with the Institute of Electrical and Electronics Engineers (IEEE) 802.16.

Referring to FIG. 1, a BTS 160 broadcasts a Mobile Neighbor Advertisement (MOB_NBR-ADV) message including neighboring BTS information to an MS 150 in step 100 and MS 150 sends to BTS 160 a Mobile MS Handover Request (MOB_MSHO-REQ) message based on the indexes of neighbor BTSs indicated by the MOB_NBR-ADV message in step 101. The MOB_MSHO-REQ message, which requests handover initiation, includes a list of candidate BTSs for an MS handover.

MS 150 may use the neighbor BTS information acquired from the MOB_NBR-ADV message or neighboring BTS information acquired by autonomous scanning in sending the MOB_MSHO-REQ message. In the latter case, the Identifiers (IDs) of the neighboring BTSs are used.

In step 103, BTS 160 notifies MS 150 whether the candidate BTSs can accept the handover request by a Mobile BS Handover Response (MOB_BSHO-RSP) message.

MS 150 notifies BTS 160 of a target BTS by a Mobile Handover Indication (MOB_HO-IND) message in step 105. The handover is performed using the ID (CID) of a Connection between MS 150 and BTS 160.

Since the above conventional handover procedure involves no MH-BTSs, a novel handover procedure and signaling method need to be defined to facilitate the implementation of MH-BTSs for relaying.

### SUMMARY OF THE INVENTION

An object of the present invention is to substantially solve at least the above problems and/or disadvantages and to provide at least the advantages below. Accordingly, an object of the present invention is to provide an apparatus and method for performing handover for a multi-hop system in a BWA communication network.

The above object is achieved by providing a handover apparatus and method for a multi-hop system in a BWA communication network.

According to one aspect of the present invention, in a handover system supporting multi-hop system in a BWA communication network, a BS periodically broadcasts a message including information about neighboring BSs and neighboring RSs. Upon receipt of the message, the BS identifies the sending node of the message by an ID encapsulated in the message and sends a message having the encapsulated ID to the node. The BS also performs a handover operation. An RS receives the broadcast message from the BS. When a new BS or RS needs to be added, the RS includes information about the new BS or RS in the broadcast message and periodically broadcasts it. Upon receipt of the message from the node, the RS sends the message with the ID of the node to the BS. Upon receipt of the message including the ID of the node from the BS, the RS sends the received message to the node. An MS receives the broadcast message from the RS and requests information about BSs or RSs to which the MS can perform a handover by notifying candidate BSs or RSs for the handover. The candidate BSs or RSs may include a BS or RS not included in the broadcast message, if the MS detects the BS or RS by scanning. The MS selects a target BS or RS based on the information about the BSs or RSs to which the node can perform the handover, received from the BS, and performs the handover to the target BS or RS.

According to another aspect of the present invention, in a handover method in a BWA communication network supporting a multi-hop system, the RS receives a handover request message from an MS. The RS determines whether candidate BSs or RSs for an MS handover set in the handover request message are BSs or RSs set by a BS, BSs or RSs set by the RS, or BSs or RSs detected by the MS. If the candidate BSs or RSs are the BSs or RSs set by the RS, the RS reconfigures information about the candidate BSs or RSs, including the reconfigured information and an ID of the MS in the handover request message, and sends the handover request message with the reconfigured information and the ID of the MS to the BS. Upon receipt of a response message with the ID of the MS for the handover request message from the BS, the RS eliminates the ID of the MS and sends the response message without the ID of the MS to the MS. Upon receipt of a handover message from the MS, the RS eliminates the ID of the MS in the handover message and sends the handover message with the ID of the MS to the BS and without the ID of the MS to the MS..

### BRIEF DESCRIPTION OF THE DRAWINGS

The above and other objects, features and advantages of the present invention will become more apparent from the following detailed description when taken in conjunction with the accompanying drawings in which:
FIG. 1 is a diagram of a signal flow for a handover procedure in a conventional BWA communication network;
FIG. 2 is an overview of handover cases that can be considered in a BWA communication network supporting multi-hop system according to the present invention;
FIG. 3 is a flowchart of an operation for sending a MOB_NBR-ADV message in an MH-BTS in the BWA communication network supporting the multi-hop system according to the present invention;
FIG. 4 is a flowchart of an operation for sending a MOB_NBR-ADV message in a BTS in the BWA communication network supporting the multi-hop system according to the present invention;
FIG. 5 is an operation of the MH-BTS when the MH-BTS receives a MOB_MSHO-REQ message according to the present invention;
FIG. 6 is a flowchart of an operation for processing a message destined for the BTS in the MH-BTS according to the present invention;
FIG. 7 is a flowchart of an operation for processing a message destined for an MS in the BTS according to the present invention; and
FIG. 8 is a flowchart of a handover procedure in the BWA communication network according to the present invention.

### DETAILED DESCRIPTION OF THE PREFERRED EMBODIMENTS

Preferred embodiments of the present invention will be described herein below with reference to the accompanying drawings. In the following description, well-known functions or constructions are not described in detail since they would obscure the invention in unnecessary detail.

The present invention provides an apparatus and method for performing handover in a multi-hop BWA network communication system.

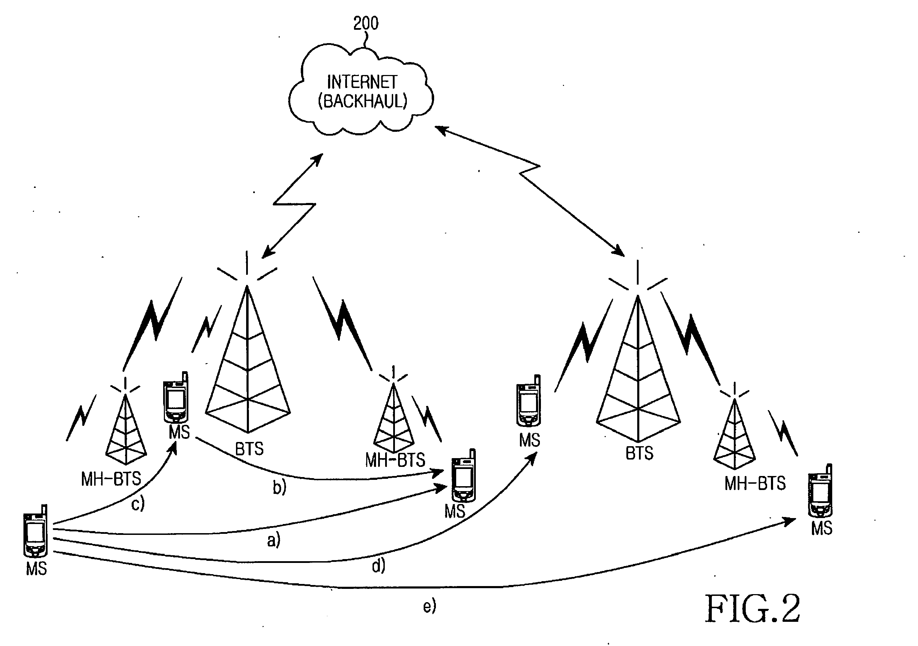

FIG. 2 is an overview of handover cases that can be considered in a BWA communication network supporting a multi-hop system according to the present invention.

Referring to FIG. 2, an MS is connected to an MH-BTS and thus communicates data with the BTS by the relay function of the MH-BTS.

Handover can be triggered depending on the location of the MS, for example where the MS moves from one MH-BTS to another within the same cell (indicated by a)), or the MS moves from a BTS to an MH-BTS within the same cell (indicated by b)), or the MS moves from an MH-BTS to a BTS within the same cell (indicated by c)), or the MS moves from an MH-BTS in one cell to a BTS in another cell (indicated by d)), or the MS moves from an MH-BTS in one cell to an MH-BTS in another cell.

When the MS moves to a neighboring cell by handover, it needs information about the MH-BTS through which it will communicate with the neighboring cell, as well as information about the neighboring cell.

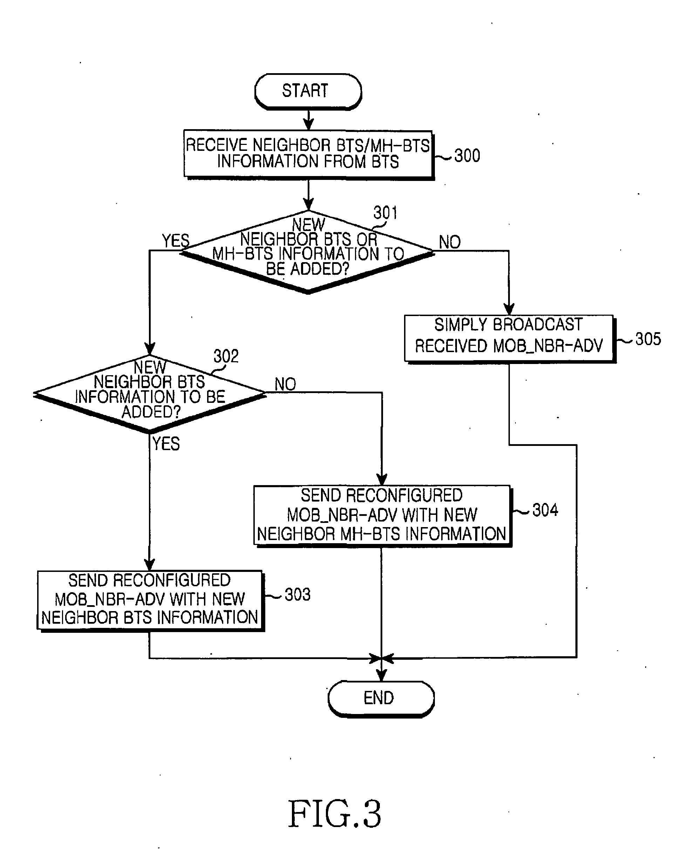

FIG. 3 is a flowchart of an operation for sending a MOB_NBR-ADV message to an MH-BTS in the BWA communication network supporting the multi-hop system according to the present invention. The MOB_NBR-ADV message is broadcast to an MS periodically from a BTS or an MH-BTS, carrying information about neighboring BSs and/or neighboring MH-BTSs.

Referring to FIG. 3, the MH-BTS receives information about neighboring BSs and/or neighboring MH-BTSs from the BTS by a MOB_NBR-ADV message in step 300.

In step 301, the MH-BTS determines whether to add information about other MH-BTSs or BSs neighboring the MH-BTS to information about the neighboring BSs and/or the neighboring MH-BTSs received from the BS. If it is determined that information about new neighboring BTS is to be added in step 302, the MH-BTS reconfigures the MOB_NBR-ADV message by further including the information of the new neighbor (BTS) in the MOB_NBR-ADV message and sends it to the MS in step 303.

If it is determined that information about new neighbor MH-BTS is to be added in step 302, the MH-BTS reconfigures the MOB_NBR-ADV message by further including the information of the new neighbor (MH-BTS) in the MOB_NBR-ADV message and sends it to the MS in step 304.

On the other hand, if the information of the new neighbor (BTS or MH-BTS) is required in step 301, the MH-BTS simply broadcasts the received MOB_NBR-ADV message to the MS in step 305. Then the MH-BTS ends the process of the present invention.

The MOB_NBR-ADV message sent by the MH-BTS has the following configuration.

**Table 1**

| Syntax | Size (bits) | Notes |
|---|---|---|
| MOB_NBR- ADV_message_format() { | | |
| Management message type=53 | 8 | |
| Skip-optional-fields bitmap | 8 | Bit[0]: if set to 1, omit Operator id field |
| | | Bit[1]: if set to 1, omit Neighbor BSID field |
| | | Bit[2]: if set to 1, omit HO process optimization field |
| | | Bit[3]: if set to 1, omit QoS related fields |
| | | Bit[4]: if set to 1, omit Neighbor RSID field |
| | | Bit[5]-[7]: reserved |
| Operator id | 24 | Operator ID |
| Configuration change count | 8 | Incremented each time the information for the associated neighbor BS or RS has changed |
| N_NEIGHBORS | 8 | Number of BSs and RSs |
| For (j=0; j<N_NEIGHBORS; | | |
| j⁺⁺) { | | |
| Phy profile id (if set) | 8 | Aggregated IDs for Phy profile |
| FA index (if set) | 8 | Frequency assignment index |
| Neighbor BSID (if set) | 24 | BS ID for OFDMA phy |
| Neighbor RSID (if set) | 24 | RS ID for OFDMA phy |
| Preamble index/subchannel index | 24 | |
| TLV neighbor information | | DCD settings, UCD settings |
| } | | |
| } | | |

Because the information of the new neighbor (MH-BTS) is added in step 304, a 24-bit "Neighbor RSID" field is further included in the MOB_NBR-ADV message to provide that information.

In addition to the "Neighbor RSID", a 24-bit "Preamble index/subchannel index" field and a "TLV neighbor information" field indicating DCD settings and UCD settings provide the neighbor MH-BTS information. The fifth bit Bit[4] of "Skip-optional-fields bitmap" in Table 1 is allocated in case no neighbor MH-BTSs are included.

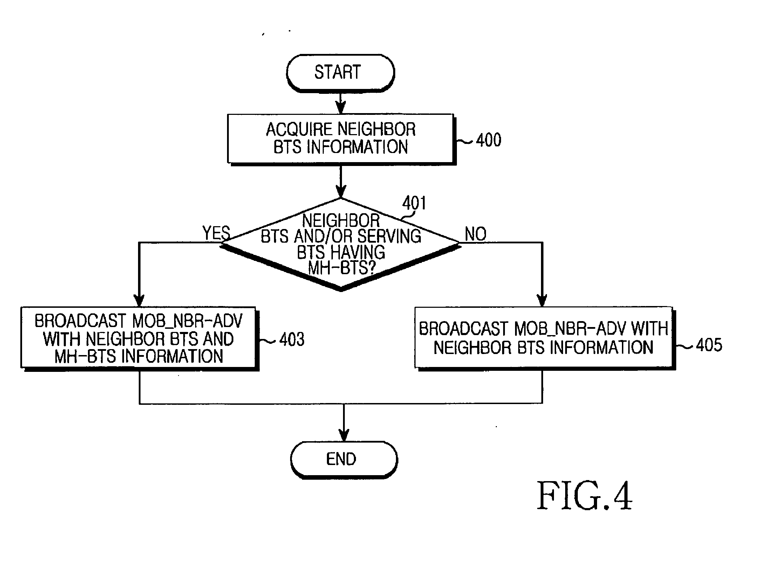

This bit is associated with the "Neighbor RSID" field. When the fifth bit of Skip-optional-fields bitmap is set to 1, this implies the absence of the "Neighbor RSID" field (i.e. the absence of any neighboring MH-BTS). This bit is used to ensure backward compatibility. The "Neighbor RSID" field is included if the BTS sets information about its neighbor BSs and MH-BTSs as shown in FIG. 4, or if the MH-BTS sets information about its neighbor BSs or MH-BTSs as shown in FIG. 3.

FIG. 4 is a flowchart of an operation for sending a MOB_NBR-ADV message in the BTS in the BWA communication network supporting the multi-hop system according to the present invention.

Referring to FIG. 4, a serving BTS acquires information about neighbor BSs in step 400 and determines whether the serving BTS or the neighbor BSs have MH-BTSs in step 401. The serving BTS is a BTS currently connected to the MS.

In the presence of MH-BTSs, the serving BTS sets information about the neighbor BSs and the neighbor MH-BTSs in the MOB_NBR-ADV message as shown in Table 1 and broadcasts it in step 403. Conventionally "Operator id" and "Neighbor BSID" are set in the MOB_NBR-ADV message. According to the present invention, in the presence of neighbor MH-BTSs, a 24-bit "Neighbor RSID" field is added to thereby identify MH-BTSs under each BS. That is, "Operator id", "Neighbor BSID" and "Neighbor RSID" are set in the MOB_NBR-ADV message.

In the absence of any MH-BTS, the serving BTS sends the neighbor BTS information by the MOB_NBR-ADV message as formatted conventionally in step 405. In this case, Bit[4]=1 in Skip-optional-fields bitmap to indicate the absence of any MH-BTS. Then the serving BTS ends the process of the present invention.

Upon receipt of the MOB_NBR-ADV message, the MS sends a MOB_MSHO-REQ message including information about candidate BSs and/or MH-BTSs for the MS handover. When the MH-BTS receives the MOB_MSHO-REQ message from the MS, it operates as follows.

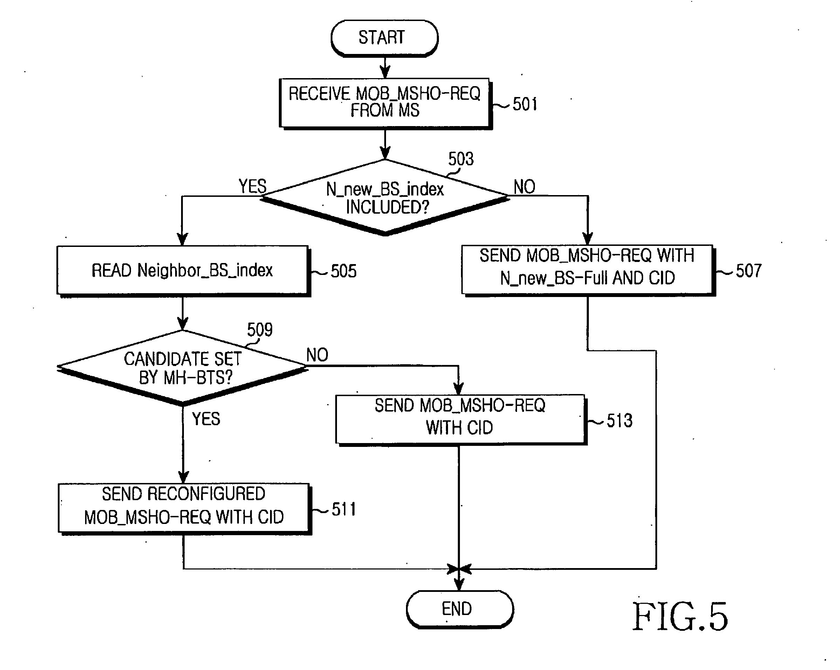

Referring to FIG. 5, upon receipt of the MOB_MSHO-REQ message in step 501, the MH-BTS checks the presence or absence of N_new_BS-index in the received message in step 503.

If the N_new_BS-index field is included in step 503, the MH-BTS reads Neighbor_BS_index in step 505.

In step 509, the MH-BTS determines whether information about neighbor BSs and/or MH-BTSs listed in Neighbor_BS_index was created and included in the MOB_NBR-ADV message by the MH-BTS.

If the MH-BTS created the neighbor BTS/MH-BTS information, referring to its database in step 511 it reconfigures the MOB_MSHO-REQ message to include the MS-requested neighbor BTS/MH-BTS information as shown in Table 2. Specifically, the MH-BTS encapsulates the Connection ID (CID) for the MS and the MH-BTS to indicate the MS's request, including a new N_new_BS_RS_index field and its associated fields in the MOB_MSHO-REQ message, and sends the reconfigured MOB_MSHO-REQ message to the BTS. In this case, the neighbor MH-BTS/BS information created by the MH-BTS is moved from N_new_BS_index to N_new_BS_RS_index. If N_new_BS_Full is included in the MOB_MSHO-REQ message, this field just carries information received from the MS to the BTS without any change.

On the other hand, if the MH-BTS did not create the neighbor BS/MH-BTS information included in Neighbor_BS_index, that is, if the MH_BTS just forwarded the neighbor MH-BTS/BS information received from the BTS to the MS in step 509, it sends the MOB_MSHO-REQ message to the BTS in step 513 with the CID for the MS and the MH-BTS encapsulated therein. This message does not include the N_new_BS_RS_index field and its associated fields.

If N_new_BS_index is not included in step 503, this implies that the MS recommends MS-scanned BTSs and/or MH-BTSs as candidates for the MS handover. Therefore, the MH-BTS encapsulates the CID for the MS and the MH-BTS in the MOB_MSHO-REQ message with N_new_BS_Full to indicate the MS's request and sends the MOB_MSHO-REQ message to the BTS in step 507. Then the MH-BTS ends the process of the present invention.

The MOB_MSHO-REQ message configured by the MH-BTS is shown in Table 2 below.

**Table 2**

| Syntax | Size (bits) | Notes |
|---|---|---|
| MOB_MSHO- REQ_message_format() { | | |
| Management message type=57 | 8 | |
| Report metric | 8 | Bitmap for BTS CINR mean, BTS RSSI mean, etc. |
| N_new_BS_index | | Number of new recommended BSs and RSs which are included in MOB_NBR-ADV message |
| { | | |
| Configuration change count for MOB_NBR-ADV | 8 | Configuration change count value |
| For (j=0; j<N_new_BS_index; j++) { | | |
| Neighbor_BS index | 8 | Neighbor BTS index |
| Preamble index/subchannel index | 8 | Phy specific preamble/subchannel index |
| Service level prediction | 3 | Expected service level from this BTS or RS |
| } | | |
| } | | |
| N_new_BS_Full | | Number of neighboring BSs and RSs to be scanned or associated, which are not included in MOB_NBR-ADV message |
| { | | |
| For (j=0; j<N_new_BS_Full; j++) { | | |
| Neighbor_BS_RS ID | 48 | BS or RS identifier |
| Preamble index/subchannel index | 8 | Phy specific preamble/subchannel index |
| Service level prediction | 3 | Expected service level from this BTS or RS |
| } | | |
| } | | |
| N_new_BS_RS_index | 8 | Number of new recommended BSs and RSs which are included in MOB_NBR-ADV message and created by RS |
| Configuration change count for MOB_NBR-ADV | 8 | Configuration change count value |
| For (j=0; j<N_new_BS_RS_index; j++) { | | |
| Neighbor_BS_RS ID | 48 | BS or RS identifier |
| Preamble index/subchannel index | 8 | Phy specific preamble/subchannel index |
| Service level prediction | 3 | Expected service level from this BTS or RS |
| } | | |
| Connection ID (CID) | 16 | Basic CID for MS and MH-BTS |
| } | | |

The N_new_BS_index field indicates candidate BSs and/or MH-BTSs for the MS handover included in the neighbor list of the MOB_NBR-ADV message. The N_new_BS_index field includes an 8-bit Configuration change count for MOB_NBR-ADV field indicating the count of the configuration changes of the MOB_NBR-ADV message, an 8-bit Neighbor_BS_index field indicating the index of a candidate BTS or MH-BTS, a Preamble index/subchannel index field indicating a preamble/subchannel index of the physical layer, and a 3-bit Service level prediction field indicating a service level expected from the candidate BTS or MH-BTS. A plurality of each of Neighbor_BS_index, Preamble index/subchannel index, and Service level prediction fields may exist according to the number of the candidate BSs and/or MH-BTSs.

The N_new_BS_RS_index field indicates candidate BSs and/or MH-BTSs that the MS has chosen among from neighbor BSs and/or MH-BTSs which were included in the neighbor list of the MOB_NBR-ADV message and created by the MH-BTS. The N_new_BS_RS_index field is created based on the N_new_BS_index field by the MH-BTS, for transmission to the BS. The N_new_BS_RS_index field includes an 8-bit Configuration change count for MOB_NBR-ADV field indicating the count of configuration changes of the MOB_NBR-ADV message, a 48-bit Neighbor_BS_RS_ID field identifying a candidate BTS or MH-BTS, an 8-bit Preamble index/subchannel index indicating a preamble/subchannel index of the physical layer, and a 3-bit Service level prediction field indicating a service level expected from the candidate BTS or MH-BTS. A plurality of each of Neighbor_BS_RS_index, Preamble index/subchannel index, and Service level prediction fields may exist according to the number of the candidate BTSs and/or MH-BTSs.

The N_new_BS_Full field indicates candidate BTSs and/or MH-BTSs that the MS has chosen from among MS-scanned BSs/MH-BTSs not included in the MOB_NBR-ADV message. The N_new_BS_Full field includes a 48-bit Neighbor_BS_RS_ID field identifying a candidate BTS or MH-BTS, an 8-bit Preamble index/subchannel index indicating a predetermined preamble/subchannel index of the physical layer, and a 3-bit Service level prediction field indicating a service level expected from the candidate BTS or MH-BTS. A plurality of each of Neighbor_BS_RS_ID, Preamble index/subchannel index, and Service level prediction fields may exist according to the number of the candidate BTSs and/or MH-BTSs.

Table 3 shows the information encapsulated in the MOB_MSHO-REQ message, that is, the CID for the MS and the MH-BTS included to indicate the request was issued from the MS.

**Table 3**

| Syntax | Size (bits) | Notes |
|---|---|---|
| Connection ID (CID) | 16 | Basic CID for MS and MH-BTS |

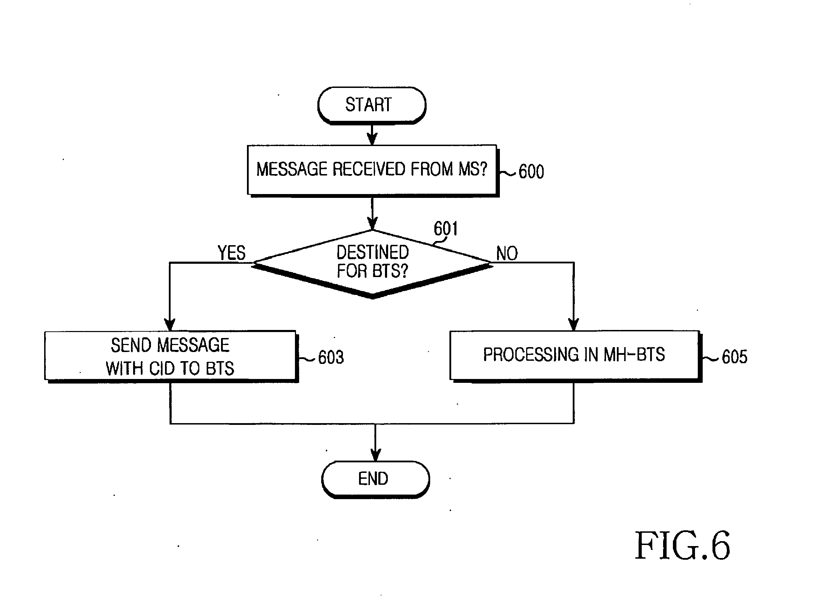

FIG. 6 is a flowchart of an operation for processing a message destined for the BTS in the MH-BTS according to the present invention.

Referring to FIG. 6, upon receipt of a message from the MS in step 600, the MH-BTS determines if the message is destined for the BTS in step 601. If the message is for the BS, the MH-BTS encapsulates the CID of the MS in the message and sends the message to the BTS in step 603. The message can be MOB_MSHO-REQ or MOB_HO-IND in the present invention.

The MON_HO-IND message indicates that the MS will perform a handover to a particular target BTS or MH-BTS, configured as shown in Table 4.

**Table 4**

| Syntax | Size (bits) | Notes |
|---|---|---|
| MOB_HO-IND_message_format() { | | |
| Management message type=59 | 8 | |
| HO_IND_type | 2 | 0b00: success |
| | | 0b01: HO cancel |
| | | 0b10: HO reject |
| | | 0b11: reserved |
| Target_BS_ID | 48 | Target BTS or RS ID |
| Preamble index | 8 | Preamble index |
| TLV encoded information | Variable | TLV specific |
| Connection ID (CID) | 16 | Basic CID for MS and MH-BTS |
| } | | |

In Table 4, a Target_BS_ID field identifies a BTS or an MH-BTS to which the MS will perform a handover. A CID field indicates the encapsulated CID for the MS and the MH-BTS to notify that the MOB_HO-IND message is a request from the MS. If the received message is not destined for the BTS in step 601, the MH-BTS processes the message in step 605 and ends the algorithm of the present invention.

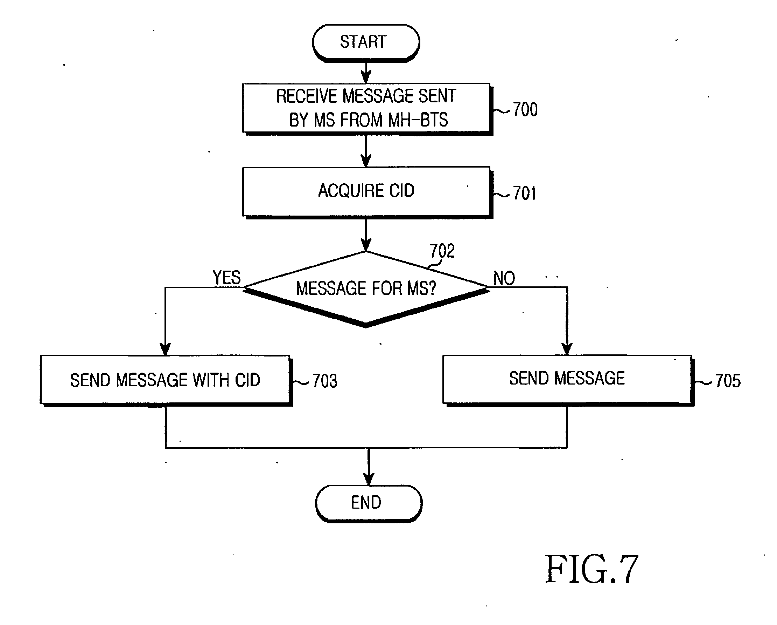

Referring to FIG. 7, the BTS receives from the MH-BTS a message that the MH-BTS has received from the MS in step 700.

The BTS acquires a CID from the message in step 701 and determines whether to send a response message for the received message to the MS via the MH-BTS in step 702.

If the received message requires a response message, the BTS encapsulates the CID of the MS in the response message and sends the response message to the MH-BTS in step 703.

For example, the response message is the MOB_BSHO-RSP message for the MOB_MSHO-REQ message. The MOB_BSHO-RSP message contains BTSs and/or MH-BTSs to which the MS can perform a handover, chosen from among candidate BTSs and/or MH-BTSs set in the MOB_MSHO-REQ message. The MOB_BSHO-RSP message has the following configuration.

**Table 5**

| Syntax | Size (bits) | Notes |
|---|---|---|
| MOB_BSHO-RSP_message_format() { | | |
| Management Message type=58 | 8 | |
| N_Recommended | 8 | Number of recommended candidates |
| For (j=0; j<N_Recommended; j_){ | | |
| Neighbor BSID | 48 | Recommended BTS or RS ID |
| Preamble index | 8 | Preamble index |
| Service level prediction | 8 | Expected service level from recommended BTS or RS |
| Connection ID (CID) | 16 | Basic CID for MS and MH-BTS |
| } | | |
| } | | |

Referring to Table 5, a CID field indicates that the MOB BSHO-RSP message is a response for the MOB_MSHO-REQ message. The CID between the MS and the MH-BTS is encapsulated within the CID field.

If the received message does not require a response message in step 702, the BTS sends a corresponding message without the encapsulated CID in step 705 and ends the algorithm of the present invention.

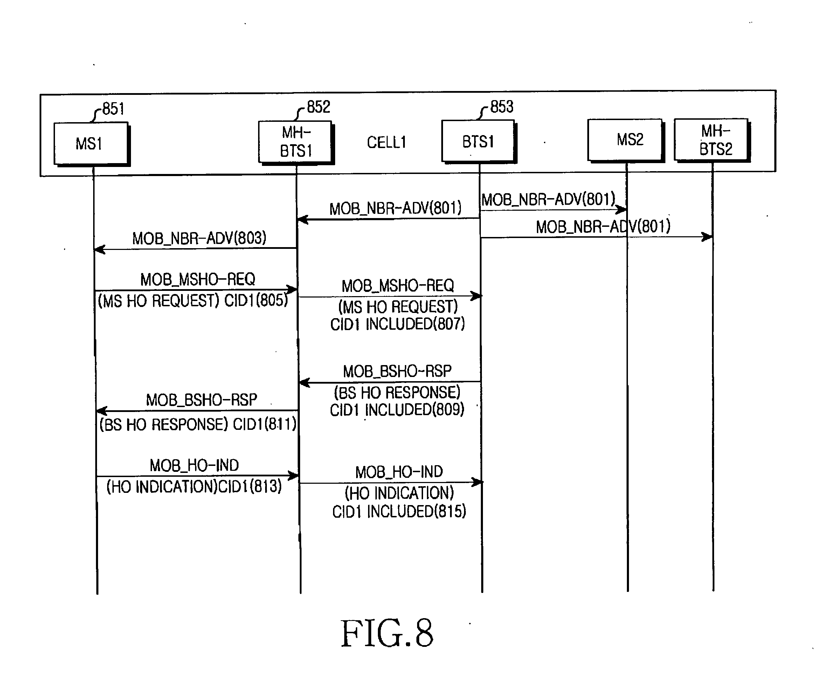

Referring to FIG. 8, a first BTS 853 (BTS1) broadcasts a MOB_NBR-ADV message in step 801. The MOB_NBR-ADV message may include neighbor MH-BTS information by setting a 24-bit optional Neighbor RSID field.

Upon receipt of the MOB_NBR-ADV message, a first MH-BTS 852 (MH-BTS 1) simply forwards the MOB_NBR-ADV message to a first MS 851 (MS1), or reconfigures the MOB_NBR-ADV message by adding new neighbor BTS or MH-BTS information and sends the reconfigured MOB_NBR-ADV message to MS 1 in step 803.

In step 805, MS1 requests initiation of a handover by a MOB_MSHO-REQ message. In the presence of candidate BSs or MH-BTSs among neighboring BSs or MH-BTSs set in the MOB_NBR-ADV message, the MOB_MSHO-REQ message contains the number of new recommended BSs and RSs which are included in MOB_NBR-ADV message (N_new_BS_index)

If BSs or MH-BTSs discovered through scanning by MS1 are candidates for the MS handover, the MOB_MSHO-REQ message contains the number of neighboring BSs and RSs to be scanned or associated, which are not included in MOB_NBR-ADV message (N_new_BS_Full).

If information about BSs or MH-BTSs listed in Neighbor_BS_index under N_new_BS_index was created by MH-BTS1, MH-BTS1 adds N_new_BS_RS_index and associated fields to the MOB_MSHO-REQ message based on Neighbor_BS_index, and sends the MOB_MSHO-REQ message to BTS1 in step 807. The MOB_MSHO-REQ message has the CID for MS1 and MH-BTS1 encapsulated therein.

BTS1 replies with a MOB_BSHO-RSP message for the MOB_MSHO-REQ message in step 809. The MOB_BSHO-RSP message includes the encapsulated CID for MS1 and MH-BTS1.

In step 811, MH_BTS1 forwards the MOB_BSHO-RSP message to MS 851.

Upon receipt of the MOB_BSHO-RSP message, MS1 determines a target BTS or a target MH-BTS and sends a MOB_HO-IND message to MH-BTS1 in step 813.

In step 815, MH-BTS1 encapsulates the CID in the MOB_HO-IND message and sends the resulting MOB_HO-IND message to BTS 1.

As described above, the present invention provides a new handover procedure and new associated messages for an MS handover involving an MH-BTS in a BWA communication network supporting multi-hop system. Therefore, the handover can be performed without errors despite the involvement of the

While the invention has been shown and described with reference to certain preferred embodiments thereof, it will be understood by those skilled in the art that various changes in form and details may be made therein without departing from the spirit and scope of the invention as further defined by the appended claims.

## Claims

1. A handover system in a wireless access communication network, comprising:
a Base Station (BS) for periodically broadcasting a message including information about neighboring BSs and neighboring Relay Stations (RSs);
an RS for receiving the broadcast message from the BS, including information about a new BS or RS in the broadcast message, when the new BS or RS needs to be added ; and
a Mobile Station (MS) for receiving the broadcast message from the RS, requesting information about BSs or RSs to which the MS can perform a handover by notifying candidate BSs or RSs for the handover.

2. The handover system of claim 1, wherein the information broadcasted by the BS identifies a node that has sent a received message by an Identifier (ID) encapsulated in the received message, sending a message having the encapsulated ID to the node, and performing a handover operation.

3. The handover system of claim 1, wherein the RS periodically broadcasts the received message with the new BS or RS, including the ID of the node in the message received from the node, sending the message to the BS, and sending the received message from the BS to the node upon receipt of the message including the ID of the node.

4. The handover system of claim 1, wherein the candidate BSs or RSs includes a BS or RS not included in the broadcast message.

5. The handover system of claim 4, wherein if an MS detects the BS or RS by scanning, the MS selects a target BS or RS based on the information about the BSs or RSs received from the BS, said information based on which the MS can perform the handover, and performing the handover to the target BS or RS.

6. The handover system of claim 2, wherein the ID is a Connection ID (CID).

7. The handover system of claim 1, wherein upon receipt of a handover request message from the MS via the RS, the BS selects BS-recommended BSs or RSs from among candidate BSs or RSs set in the handover request message and sends the information about the BS-recommended BSs or RSs together with a CID to the MS and the RS.

8. The handover system of claim 1, wherein upon receipt of a handover request message from the MS, the RS determines if the candidate BSs or RSs set in the handover request message include BSs or RSs added by the RS, and if so updates the information about the added BSs or RSs in the presence of the added BSs or RSs, appends the updated information in the handover request message, and sends a current handover request message to the BS.

9. The handover system of claim 8, wherein the current information about the added BSs or RSs include the count of configuration changes of the broadcast message, the IDs of the added BSs or RSs, preamble and subchannel indexes of physical layers for the added BSs or RSs, and service levels expected from the added BSs or RSs.

10. The handover system of claim 1, wherein in the presence of a candidate BS or RS discovered by scanning but not included in the broadcast message, the MS updates information about the candidate BSs or RSs to include the discovered candidate BS or RS in a handover request message, and sends the handover request message.

11. The handover system of claim 10, wherein the current information includes the IDs of the discovered candidate BS or RS, preamble and subchannel indexes of a physical layer for the discovered candidate BS or RS, and a service level expected from the discovered candidate BS or RS.

12. A method of broadcasting information about neighboring Base Stations (BSs) or neighboring Relay Stations (RSs) in an RS in a wireless access communication network, comprising the steps of:
receiving a broadcast message from a BS;
determining if there is a neighboring BS or neighboring RS not included in the broadcast message;
updating information about the neighbor BS or neighbor RS in the broadcast message; and
broadcasting the broadcast message periodically.

13. The method of claim 12, wherein the included information is the Identifier (ID) of the neighboring BS or neighboring RS and information indicating the presence or absence of any neighboring RS.

14. A handover method for a Mobile Station (MS) in a wireless Access communication network, comprising the steps of:
receiving a broadcast message and acquiring information about neighboring Base Stations (BSs) or Relay Stations (RSs) from the broadcast message;
determining if there are neighboring BSs or RSs other than the neighboring BSs or RSs included in the broadcast message by scanning;
selecting candidate BSs or RSs from among the neighbor BSs or RSs included in the broadcast message and the scanned neighbor BSs or RSs;
sending, if the candidate BSs or RSs include scanned neighbor BSs or RSs, a handover request message including information about the scanned neighbor BSs or RSs; and
receiving a handover response message for the handover request message, selecting a target BS or RS from among BSs or RSs included in the handover response message, and sending a handover message including the target BS or RS.

15. The method of claim 14, wherein the information about the scanned neighboring BSs or RSs being the candidate BSs or RSs includes the IDs of the scanned neighboring BSs or RSs, preamble and subchannel indexes of physical layers for the scanned neighboring BSs or RSs, and service levels expected from the said devices.

16. A handover method in a Relay Station (RS) in a wireless access communication network, comprising the steps of:
receiving a handover request message from a Mobile Station (MS);
determining if candidate Base Stations (BSs) or RSs for an MS handover set in the handover request message are BSs or RSs set by a BS, RS, or the MS;
updating information about the candidate BSs or RSs if said devices are set by the RS, including the updated information and an Identifier (ID) of the MS in the handover request message, and sending the handover request message with the updated information and the ID of the MS to the BS;
eliminating the ID of the MS, upon receipt of a response message with the ID of the MS for the handover request message from the BS and sending the response message without the ID of the MS to the MS;
appending the ID of the MS in the handover message, upon receipt of a handover message from the MS and sending the handover message with the ID of the MS to the BS; and
eliminating the ID of the MS from the response message, upon receipt of a response message for the handover message from the BS and sending the response message without the ID of the MS to the MS.

17. The handover method of claim 16, wherein if the candidate BSs or RSs are the BSs or RSs set by the RS, the updated information includes the count of configuration changes of a broadcast message, the IDs of the BSs or RSs set by the RS, preamble and subchannel indexes of physical layers for the BSs or RSs set by the RS, and service levels expected from the BSs or RSs set by the RS.

18. The handover method of claim 16, wherein the ID is a Connection ID (CID).

19. A handover method for a Base Station (BS) in a wireless access communication network, comprising the steps of:
receiving a handover request message including an Identifier (ID) of a Mobile Station (MS) and sending a response message for the handover request message, including the ID of the MS and information about BSs or Relay Stations (RSs) to which the MS can perform a handover;
receiving a handover message including the ID of the MS, processing the handover of the MS to a target BS or RS indicated by the handover message; and
sending a response message including the result of the handover and the ID of the MS, for the handover message.

20. The handover method of claim 19, wherein the ID of the MS is a Connection ID (CID).

21. A method of transmitting a message in a Base Station (BS) in a Broadband Wireless Access (BWA) communication network supporting a multi-hop system, comprising the steps of:
appending an Identifier (ID) of a Mobile Station (MS) in a message for the MS; and
sending the message to the MS.

22. The method of claim 21, wherein the ID of the MS is a Connection ID (CID).
